# EUROPÄISCHE PATENTANMELDUNG

(11) **EP 0 761 572 A2**
(43) Veröffentlichungstag der Anmeldung: **12.03.1997**
(21) Anmeldenummer: 96110019.5
(22) Anmeldetag: 21.06.1996
(51) Int. Cl.: B65G 45/10, B05B 13/02

(54) **Vorrichtung zum Aufsprühen eines Beschichtungsmittels auf die Oberfläche eines Werkstücks**

(30) Priorität: 25.08.1995 DE 19531477
(71) Anmelder: VENJAKOB MASCHINENBAU GmbH & Co.KG, D-33378 Rheda-Wiedenbrück (DE)
(72) Erfinder: Möller, Godehard, 33378 Rheda-Wiedenbrück (DE); Vagelpohl, Hans Dieter, 33378 Rheda-Wiedenbrück (DE)
(74) Vertreter: Stracke, Alexander, Dipl.-Ing.

(57) **Zusammenfassung**

2.1 Um das Transportband einer bekannten Vorrichtung von während des Aufsprühens aufgebrachten Beschichtungsmittel, beispielsweise eines Klebers, zu reinigen, werden Schaber, Rakel o.ä. in die Vorrichtung integrierte Gerätschaften eingesetzt. Die Reinigungswirkung ist hierbei jedoch nicht befriedigend, so daß es wiederholt zu Stillstandszeiten kommt, um das Transportband manuell oder mittels Lösungsmitteln zu reinigen. Die Aufgabe der Erfindung ist es, die Reinigung des Transportbandes wirkungsvoller und ohne Unterbrechung des Betriebsablaufs durchzuführen.
2.2 Dazu ist vorgesehen, daß das Transportband (1) eine Oberfläche mit geringer Adhäsion aufweist, daß eine Trocknungseinrichtung (4) vorgesehen ist, mit der das auf dem Transportband (1) befindliche Beschichtungsmittel aushärtbar ist, und daß der Trocknungseinrichtung (4) Reinigugnswalzen (5) nachgeordnet sind, die mit radial angeordneten, aus elastischem und abrasivem Material bestehenden, über den gesamten Umfang verteilten Reinigungsstreifen (6) versehen sind.
2.3 Es hat sich gezeigt, daß durch die Kombination dieser Merkmale eine optimale Reinigung des Transportbandes auch dauerhaft gewährleistet ist.

## Beschreibung

Die vorliegende Erfindung betrifft eine Vorrichtung zum Aufsprühen eines Beschichtungsmittels, beispielsweise eines Klebers, auf die Oberfläche eines Werkstücks gemäß dem Oberbegriff des Anspruches 1, wie sie aus der GB 1 333 189 und der EP 0 571 697 bekannt ist.

Um beispielsweise die Oberflächen von Möbelteilen mit Folien oder Furnieren zu laminieren, ist es bekannt, die zu bearbeitenden Oberflächen mit einem Kleber zu versehen auf den dann das Laminat aufgebracht wird.

Üblicherweise werden solche Kleber mit gattungsgemäßen Vorrichtungen aufgesprüht, wobei oberhalb des Transportbandes einer gattungsgemäßen Vorrichtung Sprühköpfe angeordnet sind, durch die der Kleber auf das Werkstück aufgebracht wird.

Naturgemäß wird das Transportband, auf dem das zu beschichtende Werkstück aufliegt, in Teilbereichen ebenfalls mit dem Beschichtungsmittel, beispielsweise dem besagten Kleber, beaufschlagt.

Um eine kontinuierliche und störungsfreie Funktion des Transportbandes zu gewährleisten, ist ein Entfernen der Klebeschicht notwendig.

Bekannt sind daher Reinigungseinrichtungen, die beispielsweise starre Reinigungsteile aufweisen, mit denen die auf dem Transportband haftende Klebschicht im Sinne eines Schabens entfernt werden soll, üblicherweise unter zusätzlicher Verwendung von Lösungsmitteln.

Allerdings haben sich die bekannten Reinigungseinrichtungen insofern weitgehend als untauglich gezeigt, als sie nicht in der Lage sind, die Klebschicht zufriedenstellend rein mechanisch von dem Transportband zu lösen.

Die verbleibenden Klebschichtreste bauen sich im Dauerbetrieb immer weiter auf, so daß die Beschichtung selbst nach einer gewissen Zeit nur noch in unvollkommenem Maße möglich ist.

Hinzu kommt, daß aus Umweltschutzgründen vorzugsweise wasserlösliche Kleber verwendet werden, wodurch konsequenterweise auch der Einsatz von Lösungsmitteln zum Entfernen des Restklebers vom Transportband ausgeschlossen sein soll.

Der vorliegenden Erfindung liegt daher die Aufgabe zugrunde, eine Vorrichtung der gattungsgemäßen Art so zu gestalten, daß mit konstruktiv einfachen Mitteln eine zuverlässige Reinigung des Transportbandes möglich ist.

Diese Aufgabe wird durch eine Vorrichtung gelöst, die die Merkmale des Anspruches 1 aufweist.

Zunächst einmal wird durch die neue Oberfläche des Transportbandes, die nur eine geringe Adhäsion aufweist, die Haftung zwischen dem Kleber und dem Transportband erheblich verringert.

Dabei kann das Transportband, also üblicherweise der Gurt, oberflächenseitig mit einer unter dem Markennamen "Teflon" bekannten Schicht oder mit einer Beschichtung, die ähnliche Eigenschaften aufweist, versehen sein.

Das weitere kennzeichnende Merkmal der Erfindung, wonach eine Trocknungseinrichtung vorgesehen ist, führt zu einer effizienteren Durchführung der nachfolgenden Reinigung des Transportbandes.

Nach einem vorteilhaften Gedanken der Erfindung ist vorgesehen, daß die Trocknungseinrichtung aus einem Wärmestrahler, vorzugsweise einem Infrarotstrahler besteht, dessen Wellenlänge so bemessen sein soll, daß die anhaftende Klebschicht in ihrer gesamten Dicke durchdrungen und somit ausgehärtet wird.

Durch das Aushärten wird verhindert, daß beim nachträglichen Reinigen mittels der Reinigungswalzen die Klebschicht verschmiert und die Reinigungswirkung dadurch beeinträchtigt wird.

Die Reinigungswalzen schließlich, mit denen der Restkleber auf dem Transportband beseitigt wird, bieten neben der außerordentlich guten Reinigungswirkung weitere Vorteile.

So ist beispielsweise ein für das Transportband verschleißfreies Entfernen der Klebschicht gegeben, da die Reinigungsstreifen ausschließlich aufgrund ihrer abrasiven Eigenschaften den ausgehärteten Kleber entfernen.

Es hat sich gezeigt, daß insbesondere Reinigungsstreifen aus einem Silikon oder silikonähnlichen Material, das einen sehr hohen Reibungskoeffizienten aufweist, eine besonders große Wirkung beim Entfernen der Klebeschicht hat.

Zweckmäßig ist es, mehrere Reinigungswalzen hintereinander zu schalten, wobei zwischen der oder den ersten Reinigungswalzen und der letzten ein so großer Abstand gewählt werden sollte, daß der verbleibende Restkleber, der beim ersten Reinigungsvorgang nicht beseitigt wurde, noch weiter aushärten kann.

Grundsätzlich ist zur Unterstützung des Aushärtvorgangs in dieser Phase die Anordnung einer weiteren Trocknungseinrichtung denkbar.

Weitere vorteilhafte Ausgestaltungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1 und 2: jeweils ein Ausführungsbeispiel einer erfindungsgemäßen Vorrichtung in einer schematisierten Seitenansicht,
- Fig. 3: eine Reinigungswalze gemäß der Erfindung in einer Seitenansicht.

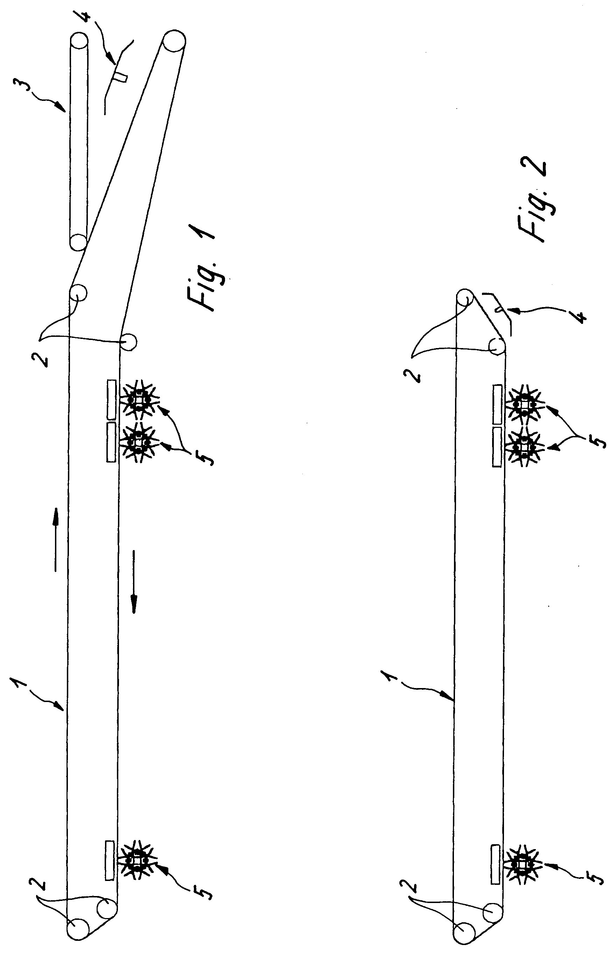

In den Fig. 1 und 2 ist jeweils eine Vorrichtung zum Aufsprühen eines Beschichtungsmittels, beispielsweise eines Klebers, auf die Oberfläche eines nicht dargestellten Werkstücks gezeigt. In ihrem Grundaufbau weist die Vorrichtung ein Transportband 1 auf, das über Umlenkwalzen 2 umlaufend geführt ist und eine Oberfläche mit geringen Adhäsionskräften aufweist.

Oberhalb des Transportbandes 1 sind nicht dargestellte Sprühköpfe angeordnet, durch die das Beschichtungsmittel auf das auf der Oberseite des Transportbandes 1 beförderte Werkstück aufgesprüht wird.

Bei dem in der Fig. 1 gezeigten Ausführungsbeispiel ist dem Transportband 1 ein Abnahmeband 3 nachgeordnet, auf das das fertig beschichtete Werkstück zur Weiterbearbeitung übergeben wird. Dabei ist das Abnahmeband 3 in Transportrichtung, die durch einen Pfeil gekennzeichnet ist, gesehenen Endbereich des Transportbandes 1 angeordnet.

In diesem Endbereich, unmittelbar oberhalb des Transportbandes 3 ist eine Trocknungseinrichtung 4 installiert, die beispielsweise aus einem Infrarot-Wärmestrahler bestehen kann. Mit dieser Trocknungseinrichtung 4 erfolgt eine Aushärtung des auf dem Transportband 1 befindlichen Rest des Beschichtungsmittels, was eine anschließende Reinigung des Transportbandes 1 erleichtert.

Zur Reinigung sind im Bereich der Unterseite des Transportbandes 1 Reinigungswalzen 5 vorgesehen, wobei in Laufrichtung des Transportbandes 1 zunächst zwei Reinigungswalzen unmittelbar nebeneinander angeordnet sind, während eine dritte mit Abstand dazu im hinteren Endbereich montiert ist.

Gegebenenfalls kann es sinnvoll sein, zwischen den beiden nebeneinander liegenden Reinigungswalzen 5 und der einzelnen eine weitere Trocknungseinrichtung anzuordnen.

Bei dem in der Fig. 2 gezeigten Ausführungsbeispiel ist kein Abmahmeband 3 vorgesehen und die Trocknungseinrichtung praktisch unterseitig des Transportbandes 1 angeordnet.

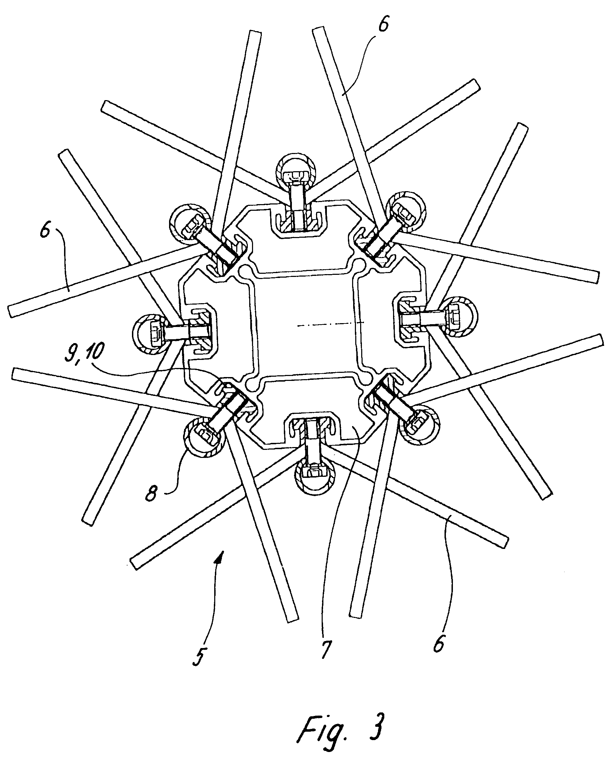

Eine Reinigungswalze 5 ist besonders deutlich in der Fig. 3 dargestellt.

Hierbei ist zu erkennen, daß ein Walzenkörper 7 aus einem Profilrohr mit polygonem Querschnitt vorgesehen ist, im vorliegenden Ausführungsbeispiel als Achteck-Rohr ausgebildet.

Jede Teilmantelfläche des Walzenkörpers 7 ist mit einer hinterschnittenen Längsnut 9 versehen, in die Nutsteine 10 eingreifen, die wiederum über Schrauben mit einer Klemmleiste 8 verbunden sind, die sich im wesentlichen über die gesamte Länge des Walzenkörpers 7 erstrecken.

Mittels der Klemmleisten 8 sind Reinigungsstreifen 6 am Walzenkörper 7 festklemmbar, wobei sich diese Reinigungsstreifen 6 gleichmäßig zu beiden Seiten der Klemmleiste 8 erstrecken und durch die Klemmung und die Ausbildung der Längsnut 9 bzw. der Klemmleiste 8 eine im Querschnitt stumpfwinklige Form einnehmen.

Die Reinigungsstreifen 6 bestehen aus einem elastischen, mit abrasiven Eigenschaften versehenen Material, beispielsweise Silikon, Gummi o.dgl., also mit einem sehr hohen Reibungskoeffizienten.

Durch Drehung der Reinigungswalzen entgegen der Laufrichtung des Transportbandes 1 und aufgrund der abrasiven Eigenschaften der Reinigungsstreifen 6 wird das auf dem Transportband 1 befindliche ausgehärtete Beschichtungsmittel, beispielsweise der erwähnte Kleber, vollständig entfernt.

Zu einer Optimierung der Reinigung trägt auch die Oberflächenbeschaffenheit des Transportbandes 1 (geringe Adhäsionskräfte) bei.

Die Ausführung der in der Fig. 3 gezeigten Reinigungswalze 5 ermöglicht eine außergewöhnlich schnelle Montage bzw. Demontage der Reinigungsstreifen 6, wie sie verschleißbedingt nach einer gewissen Zeit notwendig wird.

### Bezugszeichen

- 1: Transportband
- 2: Umlenkwalze
- 3: Abnahmeband
- 4: Trocknungseinrichtung
- 5: Reinigungswalze
- 6: Reinigungsstreifen
- 7: Walzenkörper
- 8: Klemmleiste
- 9: Längsnut
- 10: Nutstein

## Patentansprüche

1. Vorrichtung zum Aufsprühen eines Beschichtungsmittels, beispielsweise eines Klebers, auf die Oberfläche eines Werkstücks mit einem eine Oberfläche mit geringer Adhäsion aufweisende Transportband und einer Reinigungseinrichtung, mit der das auf das Transportband während des Aufsprühens gelangte Beschichtungsmittel entfernbar ist, **dadurch gekennzeichnet, daß** eine Trocknungseinrichtung (4) vorgesehen ist, mit der das auf dem Transportband (1) befindliche Beschichtungsmittel aushärtbar ist, und daß der Trocknungseinrichtung (4) Reinigungswalzen (5) nachgeordnet sind, die mit radial angeordneten, aus elastischem und abrasivem Material bestehenden, über den gesamten Umfang verteilten Reinigungsstreifen (6) versehen sind.

2. Vorrichtung nach Anspruch 1, dadurch gekennzeichnet, daß die Reinigungswalzen (5) im Bereich der Unterseite des Transportbandes (1) angeordnet sind.

3. Vorrichtung nach Anspruch 1 oder 2, dadurch gekennzeichnet, daß die Drehrichtung der Reinigungswalzen (5) entgegen der Laufrichtung des Transportbandes (1) ist.

4. Vorrichtung nach Anspruch 1, dadurch gekennzeichnet, daß -in - Laufrichtung des Transportbandes gesehen - zunächst zwei nebeneinanderliegende Reinigungswalzen (5) und dann mit Abstand dazu eine weitere Reinigungswalze (5) vorgesehen sind.

5. Vorrichtung nach Anspruch 1, dadurch gekennzeichnet, daß die Trocknungseinrichtung (4) aus einem Infrarot-Wärmestrahler besteht.

6. Vorrichtung nach Anspruch 4, dadurch gekennzeichnet, daß zwischen den beiden nebeneinanderliegenden einerseits und der mit Abstand dazu angeordneten Reinigungswalze (5) andererseits eine weitere Trocknungseinrichtung (4) vorgesehen ist.

7. Vorrichtung nach Anspruch 1, dadurch gekennzeichnet, daß die Reinigungsstreifen (6) aus Silikon, Gummi o.dgl. bestehen.

8. Vorrichtung nach Anspruch 1, dadurch gekennzeichnet, daß jede Reinigungswalze (5) einen im Querschnitt polygonen Walzenkörper (7) aufweist, dessen Begrenzungsflächen jeweils mit einer hinterschnittenen Längsnut (9) versehen sind, in denen Nutsteine (10) einliegen, die mit Klemmleisten (8) in Schraubverbindung stehen, durch die die Reinigungsstreifen (6) festklemmbar sind.

9. Vorrichtung nach Anspruch 8, dadurch gekennzeichnet, daß die Reinigungsstreifen (6) so geklemmt sich, daß sich gleichlange Schenke zu beiden Seiten der Klemmleiste (8) ergeben, die in einem stumpfen Winkel zueinander stehen.
